Europäisches Patentamt

European Patent Office

Office européen des brevets

(19)

(11) Publication number: **0 101 118**

**A2**

(12) **EUROPEAN PATENT APPLICATION**

(21) Application number: **83201093.8**

(22) Date of filing: **23.07.83**

(51) Int. Cl.³: **F 24 D 5/02**
**F 24 F 7/02**

(30) Priority: **05.08.82 NL 8203113113**
**11.08.82 NL 8203158**
**01.09.82 NL 8203416**
**28.10.82 NL 8204169**

(43) Date of publication of application:
**22.02.84 Bulletin 84/8**

(84) Designated Contracting States:
**AT BE CH DE FR GB IT LI LU NL SE**

(71) Applicant: **Plomp, Huibrecht, Ir.**
**E.H. Hartmanstraat 21**
**NL-2285 XA Rijswijk(NL)**

(71) Applicant: **Brand, Wilhelmus Klaas, Ir.**
**Pastoor Christiaan dela Hayestraat 8**
**NL-6151 AC Munstergeleen(NL)**

(72) Inventor: **Plomp, Huibrecht, Ir.**
**E.H. Hartmanstraat 21**
**NL-2285 XA Rijswijk(NL)**

(72) Inventor: **Brand, Wilhelmus Klaas, Ir.**
**Pastoor Christiaan dela Hayestraat 8**
**NL-6151 AC Munstergeleen(NL)**

(74) Representative: **Noz, Franciscus Xaverius, Ir. et al,**
**Boschdijk 155 P.O. Box 645**
**NL-5600 AP Eindhoven(NL)**

(54) **Method of heating buildings, houses or similar spaces to be heated.**

(57) A method of heating buildings, dwellings or similar spaces to be heated by using available cooling water at a temperature of about 40°C or lower, whereby the cooling water having a temperature of about 40°C or lower is supplied to the space(s) to be heated, whereby this cooling water air is heated in a heat-exchanger, said air, after having passed through the heat-exchanger, is spread in the space(s) to be heated.

FIG. 1.

Method of heating buildings, houses or similar spaces
to be heated.

The invention relates to a method of heating buildings,
houses or similar spaces to be heated by using available cooling
water of a temperature of about $40^{\circ}$C or less.

For many decades cooling water of a temperature
generally not exceeding $40^{\circ}$C has been released by industrial
processes. Frequently the temperature of the cooling water
produced by industrial processes is lying between $30^{\circ}$C and $35^{\circ}$C.
Hitherto it has been common practice to cool this cooling water
in cooling towers and/or to conduct it away to the surface water,
in which case the heat present in the cooling water is no longer
effectively utilized.

In some cases this cooling water is used to heat water
to a relatively high temperature with the aid of temperature
increasing devices such as heat pumps, the water thus heated to
a high temperature being used for town heating projects, where it is supplied to hot water radiators of generally known kind mounted in the buildings to be heated.

The use of such temperature increasing devices in the form of heat pumps or the like requires high investments and a sophisticated equipment, which is, therefore, highly sensitive to disturbances. Besides the transport pipes by which the water is conveyed from the temperature-increasing devices to the consumers have to be insulated to avoid heat loss of the high temperature water. The use of such insulated pipes also strongly increases the costs of such a heating system. Apart therefrom, fairly much energy is required to increase the temperature of the available cooling water or the like.

The invention has for its object to provide a method which is capable of mitigating the disadvantages of the prior art methods.

According to the invention this can be achieved by transporting the cooling water of a temperature of about 40$^{o}$C to the space(s) to be heated and by heating air by this cooling water in a heat-exchanger, the air being spread after having passed the heat-exchanger into the space(s) to be heated.

In the method embodying the invention the cooling water is supplied at the comparatively low temperature at which it leaves the supplier to the buildings, houses or the like to be heated without previously raising the temperature of the cooling water. Thus large, temperature-increasing, energy-consuming equipments can be dispensed with, whilst it will not be necessary to insulate the transport pipes through which the cooling water is conveyed to the spaces to be heated, since owing to the comparatively low temperature of the cooling water passing through the transport pipe the loss of heat to the ground in which the transport pipe is embedded will be negligible as compared to the quantity of passing water as long as the diameter of the transport pipe is such that a temperature drop of more than about 1$^{o}$C will not occur throughout the length of the duct. In practice this will generally imply that pipes of a diameter smaller than about 50 mms have to be insulated so that pipes branched from the transport pipe to separate buildings or the like usually have to be insulated.

By directly heating air by this cooling water in a heat-exchanger the temperature of the air passed into the space to be heated can be effectively raised, whilst the operation of the heat-exchanger can be controlled in a simple manner with the aid of a thermostat or the like mounted in the space(s) to be heated.

By means of the air thus heated satisfactory heating of the space(s) to be heated can be ensured within a broad range of varying outdoor temperatures, whilst in this method in the event of relatively low outdoor temperatures additional heating means either driven by the cooling water or formed by conventional heating systems may be employed in a simple manner.

As a matter of course, the need, in particular, for supplementary heating means can be limited or even suppressed by carrying the appropriate insulation steps.

The invention will be described more fully hereinafter with reference to a few embodiments of means for carrying out the method embodying the invention.

Fig. 1 schematically shows one embodiment of a heat-exchanger with the associated component parts suitable for use in the method embodying the invention.

Fig. 2 schematically shows the arrangement of heating pipes directly connected with the cooling water supply pipe.

Fig. 3 shows a further possible arrangement of heating pipes to which cooling water is directly supplied.

Fig. 4 shows a third possible arrangement of heating pipes to which cooling water is directly supplied.

Fig. 5 schematically shows a further embodiment of a heat-exchanger for heating air.

Fig. 6 is a graph in which the variation in temperature and the amount of heat supplied with the aid of different heating systems to the building to be heated are plotted against time.

Fig. 7 is a graph in which the heat absorbed for heating purposes is schematically plotted against time.

Fig. 8 is a schematic sectional view of a building heated by the method embodying the invention.

Fig. 9 schematically shows an embodiment of a heating system in which apart from heating warm tap water can be obtained.

Fig. 10 is a graph which can be used in calculating the various heating systems required for heating a space or spaces.

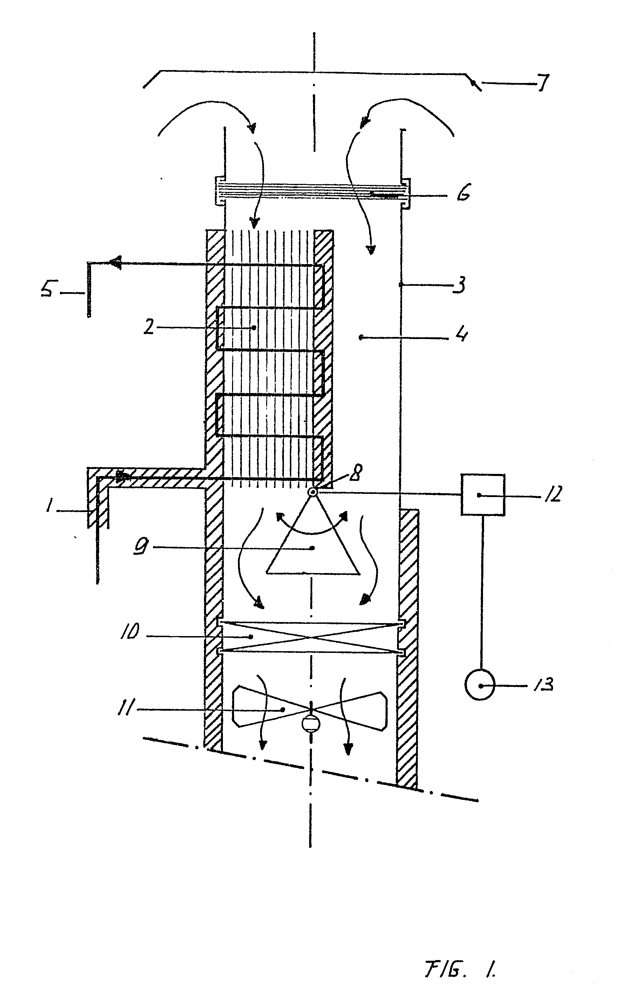

Fig. 1 shows a system suitable for heating air with the aid of cooling water having a temperature of about $40^{\circ}$C or lower. This system may be installed in or near a house, a building or the like to be heated.

The system comprises a supply pipe 1 communicating with a main transport pipe (not shown in the Figure) arranged between the source of cooling water and the building or the like to be heated.

The supply pipe 1 is connected with a heat-exchanger 2 arranged in a canal 3 so that apart from the heat-exchanger 2, which is preferably insulated, a free passage 4 is left in the canal 3. With the heat-exchanger 2 is furthermore connected an outlet pipe 5 through which the cooling water, which has given off at least part of its heat in the heat-exchanger, can be conducted away to the return pipe.

Above the heat-exchanger a filter 6 is arranged in the canal 3 and at a given distance above the top end of the canal 3 there is arranged a screening hood 7.

Below the heat-exchanger a flap 9 adapted to turn about a pivotal shaft 8 is arranged in the canal 3.

If desired or deemed necessary an auxiliary heating member 10 may be arranged in the canal 3 below the flap 9. Below said auxiliary member 10 a blower 11 is arranged in the canal 3, whose part located below the heat-exchanger is preferably insulated. By actuating said blower air can be drawn in through the open top end of the canal 3 as is indicated by arrows in Fig. 1.

It will be obvious that when the flap 9 is turned completely to the right out of the position shown in Fig. 1, the air stream through the passage 4 is blocked, whereas when the flap is turned completely to the left out of said position, the air stream through the heat-exchanger 2 is cut off. In this way by controlling the position of the flap the amount of air passing through the heat-exchanger 2 and the amount of air passing through the passage 4 beyond the heat-exchanger can be regulated, whilst the air heated in the heat-exchanger 2 and the cold atmospheric air passing through the passage 4 will be mixed at the height of the blower 11.

The flap 9 may be pivoted, for example, with the aid of a setting member 12 connected with the flap, the operation of which member is controlled by means of a thermostat 13. The thermostat 13 may be arranged in the space(s) or the like to be heated.

With the aid of the system shown in Fig. 1 atmospheric air can be sucked in and be heated with the aid of the cooling water in the heat-exchanger 2. If desired the auxiliary member 10, if provided, can be switched on under given conditions for further heating of the air drawn in by the blower 11. This air can then be supplied through further ducts (not shown) connected with the canal 3 to the space(s) to be heated.

In the case of not too low ambient temperatures the system can be sufficient to maintain the temperature in a house or the like at a sufficiently high level. In the case of higher outdoor temperatures the system can be used to produce a cooling air circulation in the building or the like by cutting off the supply of hot cooling water to the heat-exchanger 2.

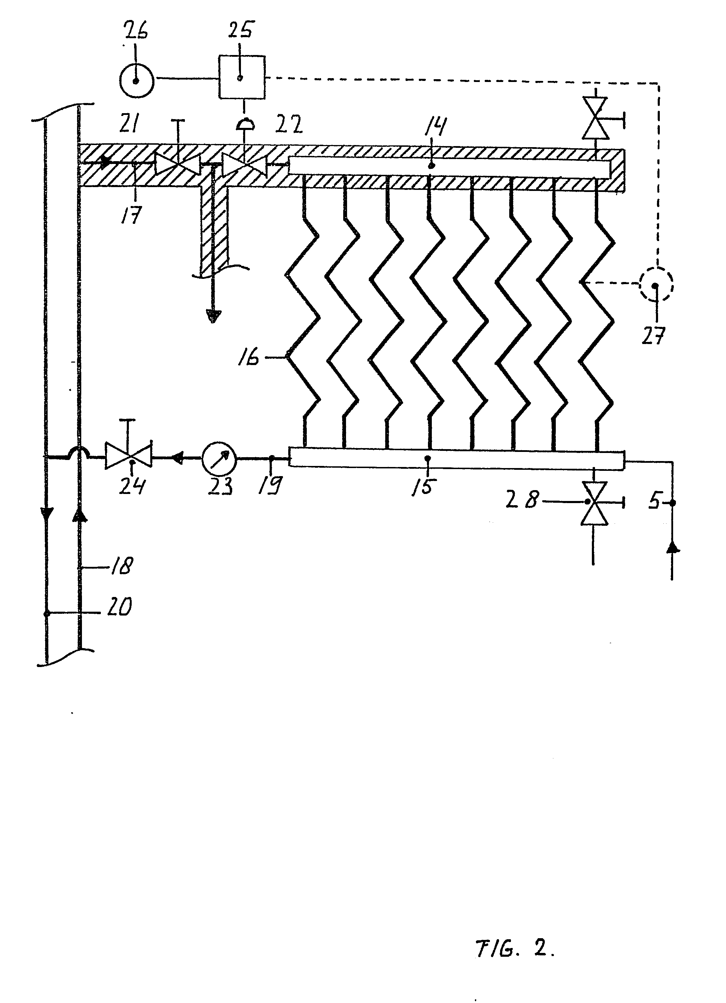

In the case of lower ambient temperatures the space(s) to be heated can be heated with the aid of the system shown in Fig. 1 in conjunction with a further system. A possible embodiment of such a system is shown in Fig. 2. This system comprises an insulated distribution chamber 14 and a collecting chamber 15, between which are arranged a plurality of pipes 16. The distribution chamber 14 is connected through an insulating supply pipe 17 with a main transport pipe 18 by which the cooling water is conveyed from the source of cooling water along the houses, buildings or the like to be heated.

The collecting chamber 15 is connected through an outlet pipe 19 with a non-insulated return pipe 20, through which the cooling water, from which the heat required for the heating purposes is derived can be conducted away, usually conducted back to the source, where it can be reused.

With the collecting chamber 15 may also be connected the outlet pipe 5 of the system shown in Fig. 1 as is indicated in Fig. 2.

From Fig. 2 it is furthermore apparent that the supply pipe 17 includes a main closing member 21, as well as a control-valve 22.

The outlet pipe 19 may include a water meter 23, whilst the outlet pipe preferably includes a closing member 24 so that by using the two closing members 21 and 24 the system shown in Fig. 2 can be cut off from the transport pipes 18 and 20.

The water meter 23 can be used for measuring the quantity of water flowing per unit time through the systems shown in Figs. 1 and 2, for example, for assessing the consumed amount of transport energy, which may have to be paid.

The valve 22 can be automatically set during operation with the aid of a control-mechanism 25, which may be governed by a temperature sensor 26 indicating the outdoor temperature. For refining the operation the control-mechanism may be acted upon by a temperature sensor 27, which measures the temperature of the surfaces at the pipes 16 giving off the heat to the space(s) to be heated.

The pipes 16 may be arranged in, on or at floors and/or ceilings or walls of the houses, buildings or the like to be heated. The water tapped from the transport pipe 18 flows back to the return pipe 20 through the distribution chamber 14, the pipes 16, the collecting chamber 15 and the outlet pipe 19. The water flowing through the pipes 16 will give off its heat to the building.

Fig. 2 furthermore shows that the system may, if necessary, be drained with the aid of a tap 28 connected with the collecting chamber 15.

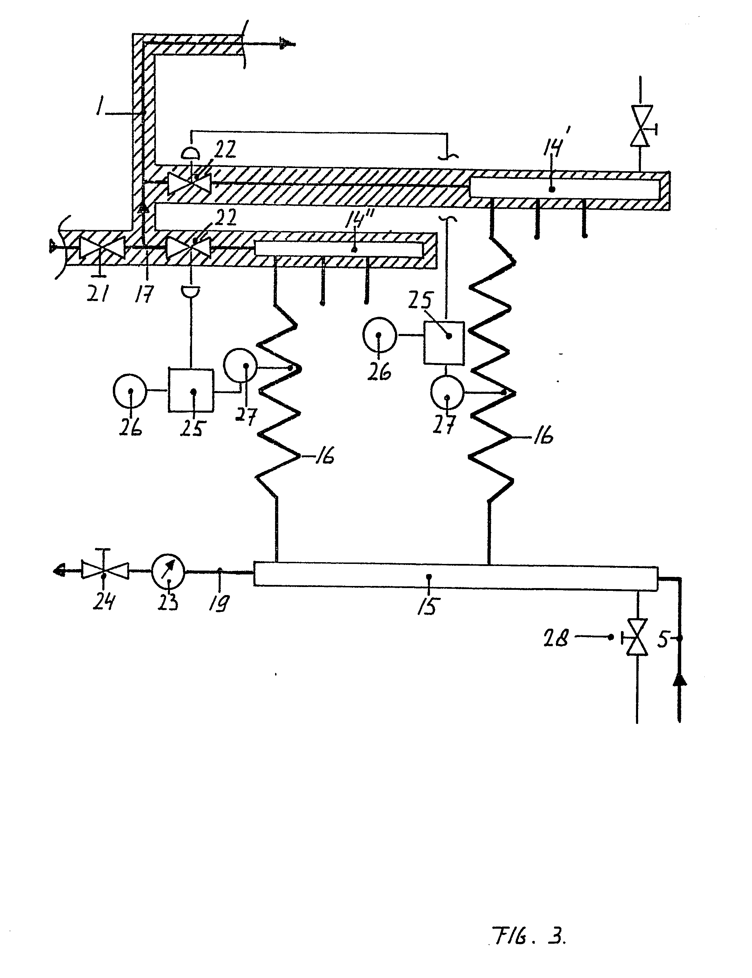

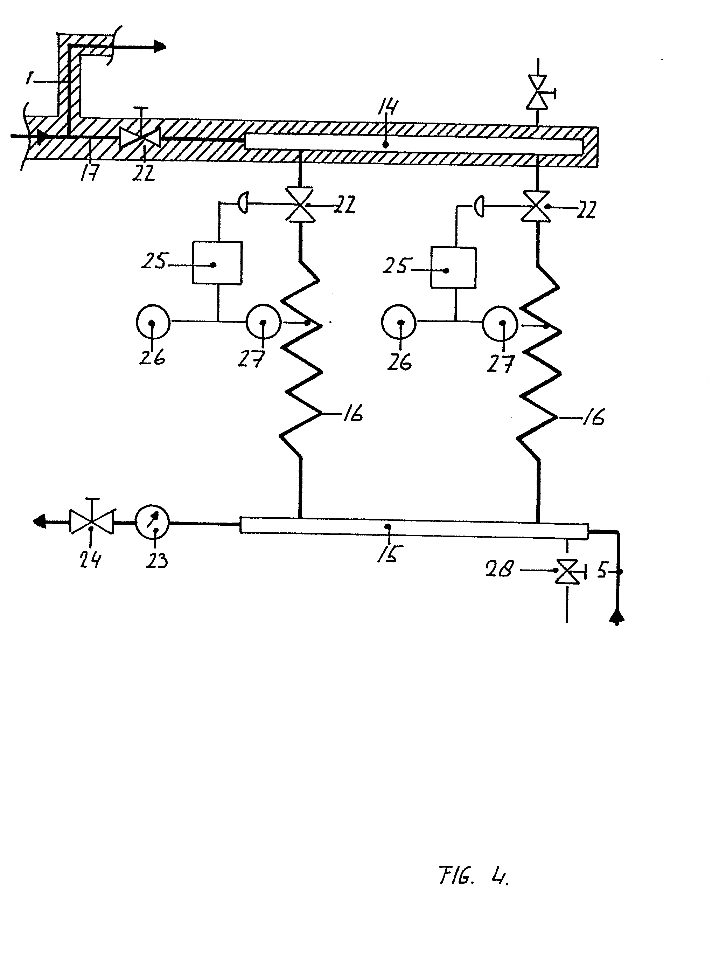

Various variations of the system shown in Fig. 2 can be designed as is shown in Figs. 3 and 4. The parts shown in Figs. 3 and 4 corresponding with those shown in Fig. 2 and discussed above are designated in Figs. 3 and 4 by the same reference numerals as· in Fig. 2.

As is shown in Fig. 3 the collecting chamber 14 of this embodiment is subdivided into a plurality of parallel-connected distribution chambers 14' and 14", whilst between these distribution chambers 14' and 14" groups of pipes 16 are arranged, whilst the heat dispensed by one group of pipes can be controlled in the manner described above independently of the heat dispense in the other group of pipes. In this embodiment the supply pipe 1 for the system shown in Fig. 1 is also connected with the supply pipe 17.

The system shown in Fig. 3 may be effectively used when in a building the temperatures in different rooms have to be controllable independently one of the other.

A further variant is shown in Fig. 4, in which between the distribution chamber 14 and the collecting chamber 15 pipes 16 or groups of pipes 16 are arranged, the heat dispense of which is independently controllable.

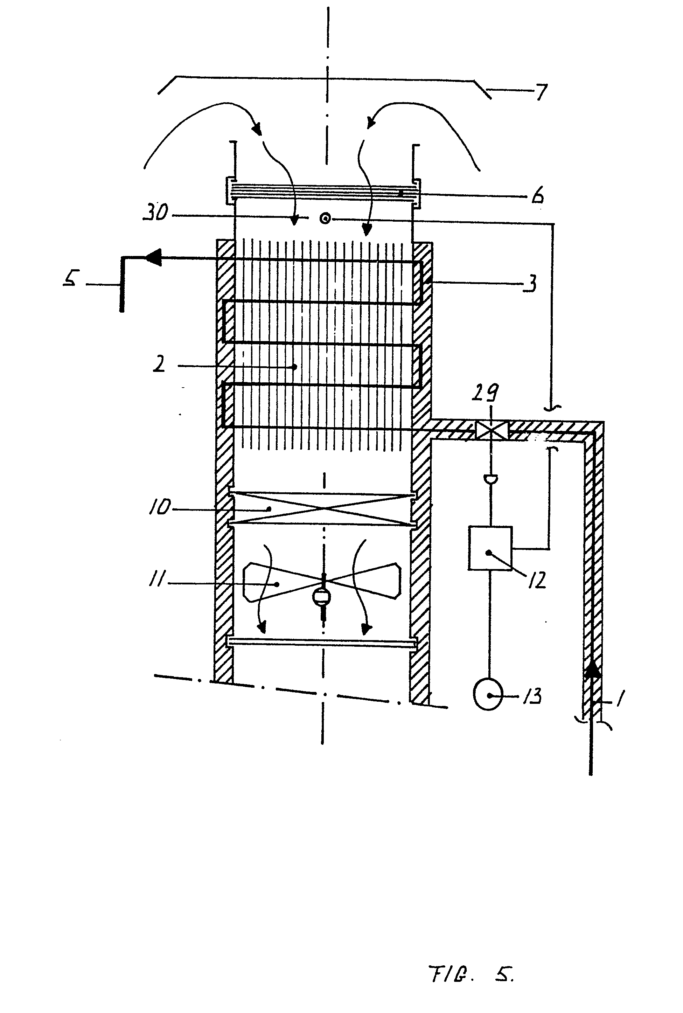

Fig. 5 shows a variant of the system shown in Fig. 1. The parts of the system shown in Fig. 5 which correspond with those of the system shown in Fig. 1 are designated in Fig. 5 by the same reference numerals as in Fig. 1.

In the construction illustrated in Fig. 5 the passage of the channel 3 is fully occupied by the heat-exchanger 2 so that the whole amount of air drawn in by the blower 11 has to pass through the heat-exchanger. In this case the temperature is controlled by the thermostat 13 connected through the control-mechanism with a control-valve 29 included in the water supply pipe. Upstream of the heat-exchanger 2 the channel 3 is provided with a temperature sensor 30 connected with the control-member 12. By means of this temperature sensor the valve 29 can be prevented from completely closing at temperatures below zero in order to avoid freezing of the heat-exchanger 2.

The system shown in Fig. 1 or in Fig. 5 can be very effectively employed in conjunction with one of the systems shown in Figs. 2 to 4 for heating houses, buildings, spaces or the like whilst using industrial cooling water having a temperature of about $40^{\circ}$C or lower.

When the connection value is defined by the amount of heat per unit time expressed in KW to be supplied to a building, a house or the like in order to maintain, at an outdoor temperature of $-10^{\circ}$C, the desired indoor temperature of, for example, $20^{\circ}$C for living rooms, $15^{\circ}$C for bedrooms and $24^{\circ}$C for bathrooms, the systems to be installed in the building concerned have to be designed so that the system shown in Fig. 1 or Fig. 5 can supply the maximum part of the connection value (for example, 10 to 40%), whilst the device shown in Figs. 2, 3 or 4 or the post-heater 10 of Fig. 1 or Fig. 5 can supply the remainder of the connection value A.

As stated above, the air heating system shown in Fig. 1 or Fig. 5 will be controlled with the aid of a room thermostat which can respond rapidly to variations in the temperature in the space to be heated. In many cases the air blown into the space(s) to be heated need not be recirculated for regaining heat and, in principle, it can be conducted out of the space(s) to be heated through adequate ventilation openings, which will simplify the system required for heating. Recirculation can only be useful to reduce the heat-exchanging surface required in the heat-exchanger 2 of Figs. 1 and 2. In this case the additional investments for the return channels have to be balanced out against the lower investments for the heat-exchanger 2.

Owing to the low temperature of the water supplied to the system of Figs. 2, 3 or 4 this system can respond only slowly to temperature fluctuations occurring in the space(s) to be heated. Therefore, with regard to living comfort it is not efficient to use a system shown in Figs. 2, 3 or 4 fed by cooling water for complete heating and in accordance with the invention this system is controlled in dependence on the outdoor temperature to an extent such that at a lower temperature the system of Figs. 2, 3 or 4 supplies more heat, whilst temperature fluctuations in the space(s) to be heated are compensated for by the system shown in Fig. 1 or 5.

The entire heating system is furthermore preferably designed so that the so-called ventilation multiple, that is to say, the factor V by which the capacity I of the space(s) to be heated has to be multiplied to assess the amount of air displaced by the ventilator will lie between 0.5 and 4.

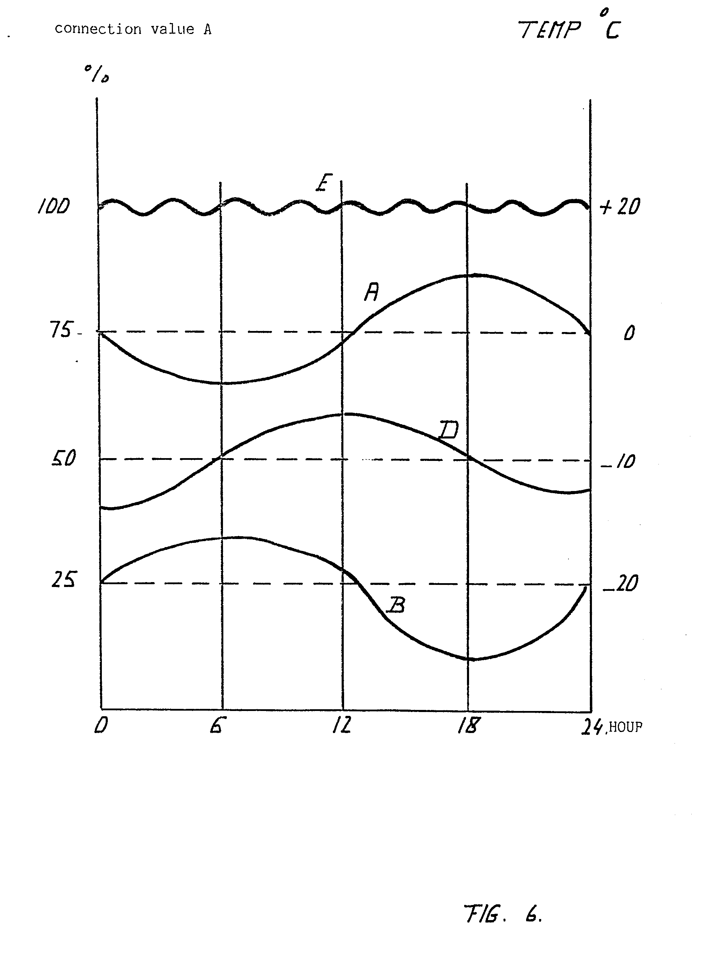

The operation of the above-described combination of heating systems is schematically illustrated in the graph of Fig. 6. In this graph the number of hours of a day is plotted on the abscissa, the connection value A in per cent is plotted on the left-hand ordinate and the temperature in degrees centigrade is plotted on the right-hand ordinate. In this embodiment it is assumed that the air heating system of the type shown in Fig. 1 or 5 can supply 25 % of the required connection value A at an outdoor temperature of $-10^\circ$C and the system of Fig. 2, 3 or 4 directly operating on water will supply 75 % of the connection value A. The variation in outdoor temperature is indicated by the line D in the graph. The line A indicates the percentage of the amount of heat supplied by the heating system of Fig. 2, 3 or 4 and the line B indicates the amount of heat supplied by the air heating system of Fig. 1 or 5.

The line E indicates the temperature variation in the space(s) to be heated.

It will be apparent from the course of the lines A and D that the heating system of Fig. 2, 3 or 4 can follow only slowly the variations in the outdoor temperature. The inertia of this heating system of Fig. 2, 3 or 4 directly due to the cooling water heating mode can be compensated for as will be seen from the source of the line B by the air heating device of Fig. 1 or 5, which will much more rapidly respond to temperature fluctuations in the space(s) to be heated so that by the combination of these two heating systems of particularly simple design the desired,

-10-

uniform temperature can be maintained in the space(s) to be heated.

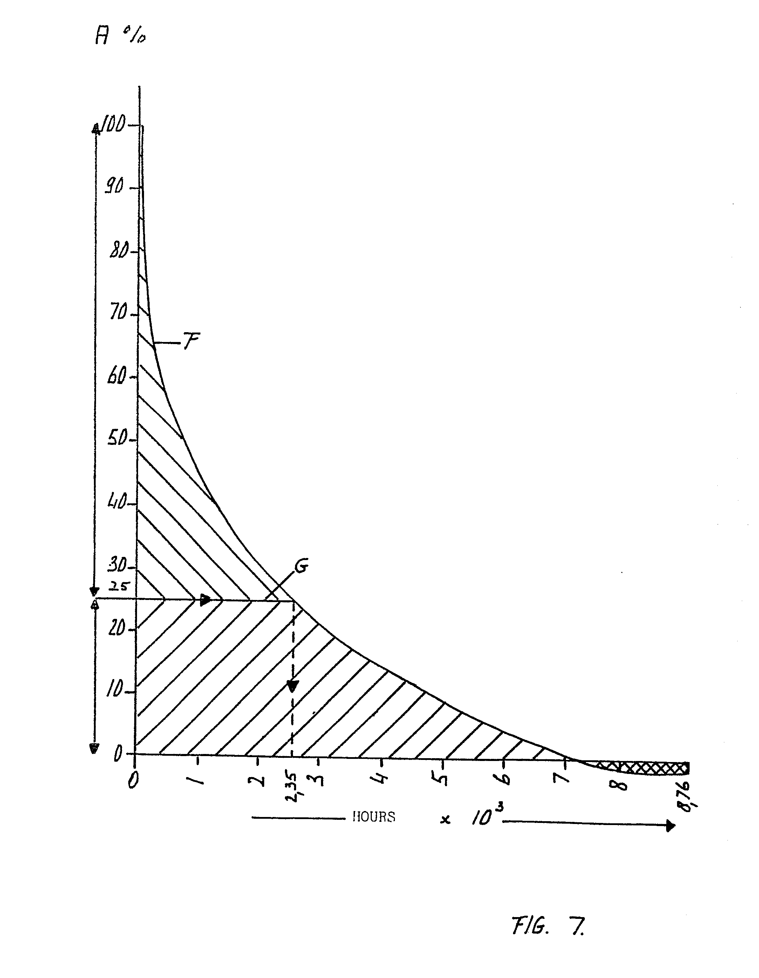

Fig. 7 is a graph in which the required heat is plotted on the ordinate in a percentage of the above-mentioned connection value A and the time period in hours corresponding with the number of hours a year is plotted on the abscissa. From the resultant curve F indicating the relationship between the demanded amount of heat and the time it appears that usually in one year the full connection value is required only for a very limited number of hours.

It being again assumed that the air heating system supplies 25 % of the connection value and the water heating system of Fig. 2, 3 or 4 75 % of the connection value, the heating system will have to operate for about 2350 hours during the whole year as will appear from the graph of Fig. 7. For the remainder of the year the air heating system of Fig. 1 or 5 can supply the required heat and, as the case may be, provide a cooling effect as is indicated by the cross-hatched region below the abscissa of the graph.

In the graph of Fig. 7 the cross-hatched region below the abscissa G represents the amount of heat per year supplied by the air heating device of Fig. 1 or 5, whereas the cross-hatched part above said line represents the annual amount of heat supplied by the water heating device of Fig. 2, 3 or 4. The conclusion is that in this example the annual amount of heat provided by the air heating system of Fig. 1 or 5 exceeds the annual amount of heat provided by the water heating system of Fig. 2, 3 or 4.

Examples of use.

Example I.

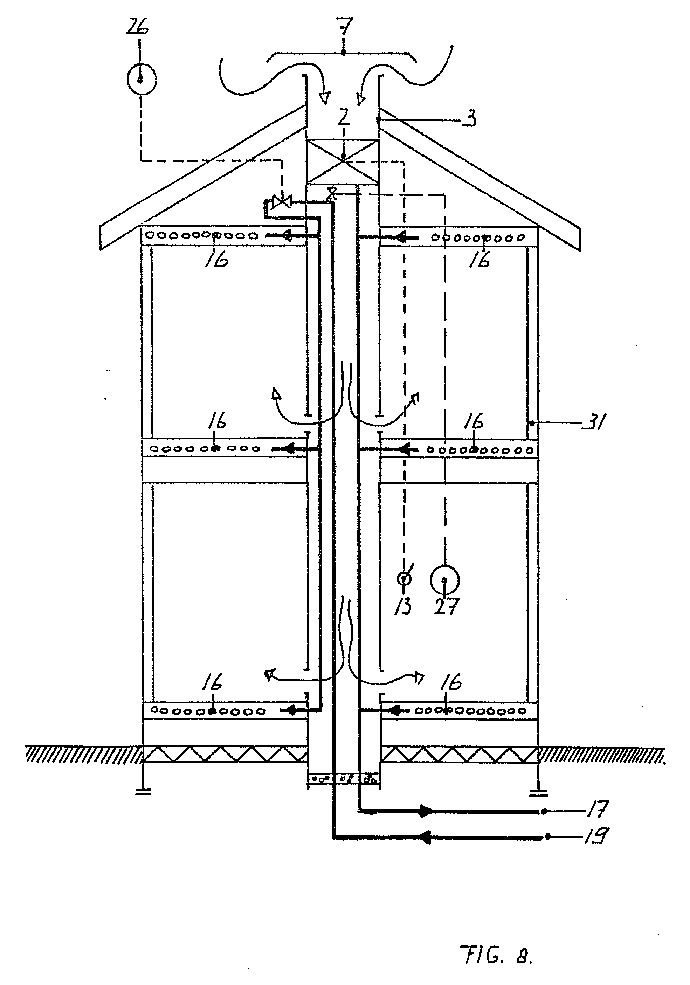

Fig. 8 is a schematic sectional view of a house, which may be one of two houses below a single roof. This Figure schematically shows a number of parts of the above-described heating system and designated by reference numerals corresponding with those used in said Figures. When designing such a heating system on the one hand the water heating system of Fig. 2, 3 or 4 has to be constructed so that the heat supplied by this system does not bring about a higher temperature in the space(s) to be heated than the temperature determined by the thermostat 13, which controls the air heating system, whereas on the other hand the contribution to the required heat supplied by the air heating system has to be provided with a minimum ventilation multiple in order to minimize the electric energy consumed by the ventilator. Besides the cost involved in the heating systems has to be balanced against investments in insulation, if required, of the space(s) to be heated. For the sake of clarity this will not be further set out in this example.

For a width of the house of 5.5 metres and a glass percentage of 15 % the following data can be assumed for the dwelling.

- Capacity $\qquad$ $I = 310$ ms$^3$
- Façade surface $\qquad$ 120 ms$^2$ (including side gable)
- Glass surface $\qquad$ 15 %
- Floor surface $\qquad$ 44 ms$^2$
- Roof surface $\qquad$ 60 ms$^2$
- Total surface $\qquad$ $O_b = 224$ ms$^2$.

The following magnitudes are known or can be freely chosen:

- desired indoor temperature $\qquad$ $T_{bi} = 20^{\circ}C$
- temperature of the available cooling water $\qquad$ $T_{ki} = 35^{\circ}C$
- exit temperature of the cooling water at
  the outlet of water heating device $\qquad$ $T_{kuA} = 30^{\circ}C$
  at the outlet of air heating device $\qquad$ $T_{kuB} = 15^{\circ}C$
- outdoor temperature for the design $\qquad$ $T_{o} = -10^{\circ}C$
- temperature of the air at the outlet
  of heat exchanger 3 of air heater (Fig.1) $\qquad$ $T_{1uB} = 30^{\circ}C$
- minimum ventilation multiple $\qquad$ $V_- = 0.8$
- maximum ventilation multiple $\qquad$ $V_{max} = 1.25$
  Recirculation multiple $\qquad$ $R_c = 0$
- Rate of industrial cooling water for
  water heating device $\qquad$ $\varphi_{KA}$ (kg/h)
- Rate of industrial cooling water for
  air heating device $\qquad$ $\varphi_{KB}$ (kg/h)

- specific heat air $\qquad$ $c_1 = 1$ KJ/kg $^\circ$C

- specific heat water $\qquad$ $c_w = 4.2$ KJ/kg $^\circ$C

- specific weight air $\qquad$ $\rho_1 = 1.3$ kg/m$^3$

- specific weight water $\qquad$ $\rho_w = 1000$ kgs/m$^3$

- conversion factor $\qquad$ W $\rightarrow$ kcal/h 0.86

- connection value = $A_T$ = the amount of heat to compensate transmission losses at $-10^\circ$C

- $A_A$ = part of $A_T$ to be provided by water heating device in W

- $A_B$ = part of $A_T$ to be provided by air heating device in W

- $\alpha_3$ = heat transfer coefficient in heat-exchanger 2 = 36 W/m$^2$ n$^\circ$C

- $O_B$ = designed load for air heating device in W

- $\Delta_{Tln}$ = logarithmic temperature difference in heat-exchanger 2 between air and cooling water,

- contribution solar radiation $\qquad$ 0 W

- contribution internal heat sources $\qquad$ 0 W

By means of the foregoing data first the distribution of the air heating device to the connecting value is calculated and subsequently the contribution of the water heating device, after which by means of the overall connection value the average, desired k value of the dwelling is calculated.

I. <u>Contribution of the air heating device to the connection value $A_T$.</u>

The calculation has to be based on the minimum amount of ventilation air that can be heated to a maximum of $30^\circ$C ($T_{1uB}$) and that can leave the dwelling through vent openings in doors and windows at a room temperature of $20^\circ$C ($T_{bi}$). This amount of air can only impart heat to the dwelling. The contribution of the air heating device B to the connection value $A_T$ then is:

$$A_B = \frac{V_{min} \times I \times \rho_1 \times c_1 \times (T_{1uB} - T_{bi})}{3600}$$

$$\frac{0,8 \times 310 \times 1,3 \times i \times (30-20)}{3600} \, 10^3 = 9 \pm 900 \text{ W}$$

As a matter of course, the designed load of the air heating device has to exceed the above-mentioned value of 900 W.

-13-

II Contribution of the water heating device to the connection value $A_T$.

For the water heating device in a first instance the surfaces are chosen which can be provided with the pipes 16 at relatively low cost. If it is found that this arrangement brings about excessively high insulation costs because too few pipes can be disposed on said surfaces for maintaining the required temperature without carrying out insulation steps, the other surfaces (of lower economic efficiency) have to be included in the design, after which all calculations have to be rechecked.

In this example the following surfaces enter into consideration:

- ground floor    .                                        44 $ms^2$
- storey floor                                  44 $ms^2$
- ceiling, hall and bath          12 $ms^2$
Total   -                                    100 $ms^2$.

The mean water temperature is 32.5 $^o$C.
At a moderate heat resistance of the floor covering (R = 0.07 $m^2$ K/W) 50 $W/m^2$ can be taken into account for the heat distribution of a surface having at intervals of 0.1 m a heating pipe 16 of 0.02 m diameter. At an available surface of 100 $ms^2$ the contribution of the water heating device to the connection value $A_T$ is 100 x 50 = 5000 W.

The contribution of the two heating devices to the connection value $A_T$ are therefore:

5000 W + 900 W = 5900 W

III Check of the insulation cost of the dwelling:

The resultant connection value $A_T$ has to be checked on the basis of the costs of the insulation steps to be carried out.
Since the connection value $A_T$ to be provided at a maximum by the two heating devices has to be equal to the transmission losses of the dwelling, the mean k value of the dwelling required can be found by:

$$k_{gem} = \frac{A}{O_b \times (T_{bi} - T_o)} = \frac{5900}{224 \times 30} = 0.88 \; W/m^2 k$$

Correction of this low k value with regard to 15% of glass surface gives for the mean k value of the closed parts: 0.5 $W/m^2$. Since NEN 1068 maintains as k value 0.68 $W/m^2$ K, there is no need for many additional insulation precautions for adapting the dwelling to the connection value of 5900 W.

In this example a contribution to the required heat by solar radiation and by internal heat sources has not been taken into account. This contribution is assumed to be zero.

Example IV. Proportioning of the water heating device.

As stated in the calculation of the connection value $A_T$ pipe diameter is 0.02 m

centre-to-centre distance between pipes 0.1 m, the overall length required being thus about 1000 ms. This required length of the pipes 16 could be divided into eight parallel-connected strands of 125 ms in the embodiment of the water heating device shown in Fig. 2. The required amount of cooling water (rate $\varphi_{KA}$) of the water heating device is:

$$\varphi KA = \frac{A_A \times 3600}{c_w (T_{ki} - T_{kuA})} = \frac{5000 \times 3600}{4.2 \times 10^3 \times 5} = 860 \text{ kg/h or else } 0{,}86 \text{ m}^3\text{h.}$$

V. Proportioning of air heating device.

For the air heating device the design load has to exceed the contribution to the connection value for the following reasons:

- The air leaving the dwelling at 20 °C has to be heated by the air heating system starting at the outdoor temperature, the so-called ventilation loss $A_v$.

- The maximum ventilation multiple has to be applicable to obtain flexibility of the system.

Therefore, the design load of the air heating device has to be determined on the basis of the maximum ventilation multiple and the heating of the air from the outdoor temperature up to the temperature at which the air leaves the heat-exchanger 2 (Fig. 1 and 5).

The design load can be found from:

$$O_B = \frac{V_{max} \times I \times c_\ell \times (T_{lub} - T_o) \times \rho\ell}{3600}$$

$$= \frac{1.25 \times 310 \times 1{,}3 \times \quad \times (30 - -10) \times 10^3}{3600} = 5600 \text{ W}$$

The required dimensions of the heat-exchanger 2 of Fig. 1 can, therefore,

be found from:

$$F_{required\ B} = \frac{O_B}{\alpha_3 \times (\Delta T_{\ell n})} = \frac{5600}{36 \times 12,5} = 12,5\ m^2$$

There may be chosen a plate exchanger of 0.40 x 0.40 x 1.00 m having 32 plates of 100 x 0.4 m at a distance of 0.12 m.

The required amount of cooling water for the air heating device $Q_{KB}$ is:

$$Q_{KB} = \frac{A_B \times 3600}{c_w \cdot (T_{ki} - T_{kuB})} = \frac{5600 \times 3600}{1 \times 10^3 \times 20} = 0,24\ m^3/h.$$

VI. Total amount of cooling water required for the dwelling.

The total amount of cooling water required $Q_K = Q_{KA} + Q_{KB} + 0,86x$ 0.24 = 1.1 ms$^3$/h. This implies connecting pipes 17 and 19 of the size of 30 to 50 mms diameter.

In the foregoing calculation the additional heating member 10, which may be included in the air channel 3, and which may be driven by gas or electricity, is not taken into account. Such a heating member 10 might be switched on under conditions of extreme cold or the like.

From the foregoing it will be obvious that by utilizing the low temperature cooling water,which has, in general, hitherto been wasted, buildings, dwellings or similar spaces can be effectively heated. It may be assumed that this cooling water can become available for heating purposes at low costs, since the heat included in this cooling water has so far not been usefully workable and the cooling of this cooling water adversely affects the environment. As stated above, the transport mains can be installed at low cost, since the large transport pipes do not require insulation so that the system of transport pipes and the associated pumping stations and the like may be compared with the known drinking water mains.

Because energy can thus become available at low cost, it will in general be sufficient, as stated above, to measure the amount of water consumed with the aid of a simple water meter for fixing the account. As the case may be, a stream inhibiter may be included in the mains for heating a given building, dwelling, space or the like for determining the maximum flow capacity of the connection concerned and the and the account may be based on this maximum flow capacity.

The air devices shown in Figs. 1 or 5 and the water heating device shown in Figs. 2, 3 and 4 can be made cheap, since the temperature load for the various parts of these heating devices is very low in view of the low temperature of the cooling water, which will at the most be about 40 °C. Therefore, synthetic resin pipes, for example, of soft polyethylene may be used. Moreover, the number and design of the required accessories such as closing members and the like can be limited and simple. The control-system described is composed of commercially available parts so that even this control-mechanism does not affect the cheapness of the construction. It is not necessary to use return channels for regaining heat from the air and the construction may be such that the air drawn in by the ventilator from the outside can again escape through appropriate vent holes.

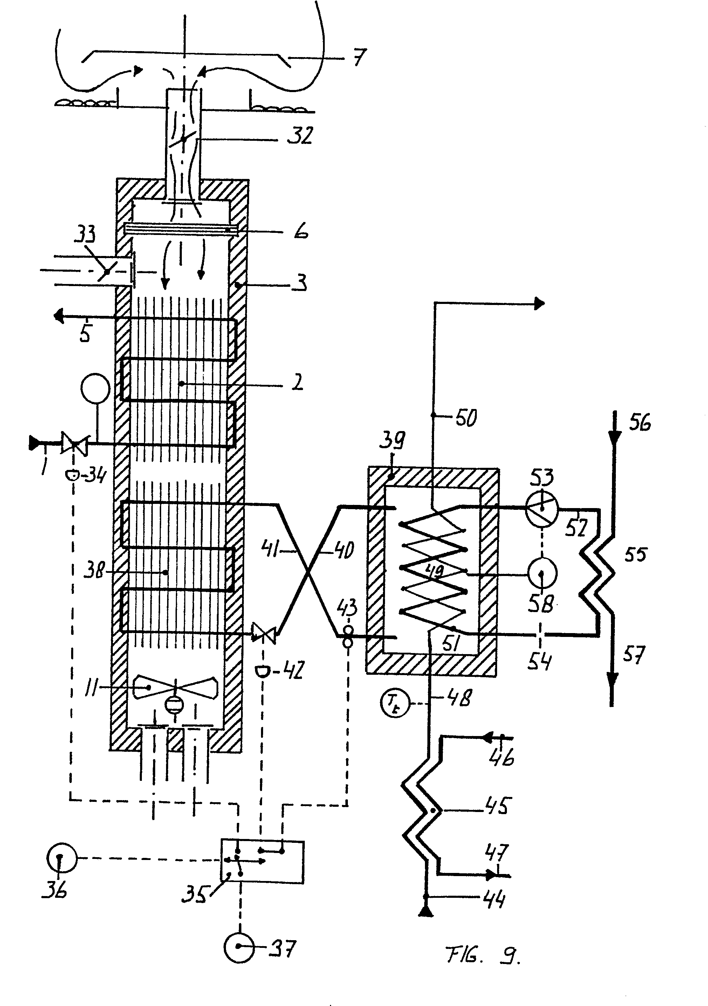

Fig. 9 shows a further embodiment of a system for heating a building, a dwelling or a similar space by using industrial cooling water of a temperature of about 40 °C or lower, whilst recirculation of part of the air is carried out.

Parts corresponding with those illustrated and described with reference to the preceding embodiments are designated by the same reference numerals as in the preceding Figures.

From Fig. 9 it is apparent that the inlet opening of the channel 3 located below the hood 7 has a setting valve 32. Near the top end of the channel 5 an opening is provided in the building, dwelling or a similar space to be heated for introducing recirculation air, the passage of said opening being controllable with the aid of a setting valve 33.

The inlet duct 1 of the heat exchanger 3 includes a closing member 34, which can be controlled by means of a control-mechanism 35, with which are connected a thermostat 36 measuring the outdoor temperature and a thermostat 37 measuring the temperature in the space(s) to be heated.

Below the heat exchanger 3 the channel 3 is provided with a further heat-exchanger 38 comparable with the heat-exchanger 10 of the preceding embodiments. To this heat-exchanger water heated in an insulated vessel 39 can be fed through a pipe 40 and from a pipe 41 this water can be fed back from the heat-exchanger to the vessel 39. The pipe 40 includes a closing member 42 and the pipe 41 includes a pump 43. Both the pipe 42 and the pump 43 are controlled with the aid of the control-mechanism 35.

A supply pipe 44 for cold water or drinking water is connected with a heat-exchanger 45. With the heat-exchanger 45 is furthermore connected a supply pipe 46 for the industrial cooling water, which can be conducted out of the heat-exchanger 45 through an outlet pipe 47. It will be obvious that in this way the cold tap water or drinking water can be heated in the heat-exchanger 45 to a temperature at least substantially equal to the temperature of the industrial cooling water.

An outlet pipe 48 of the heat-exchanger conveys the heated tap water to a heating helix 49 or the like arranged in the vessel 39. An outlet pipe 50 for the heated tap water or drinking water is connected with said heating helix.

A further helix 51 arranged in the vessel 39 forms part of the mains of a small heat pump system, said mains comprising a compressor 53 and a choke 54 as shown in Fig. 9. A part of the mains located between the choke 54 and the compressor 53 is passed through a heat-exchanger 55, to which industrial cooling water is supplied through an inlet pipe 56 and from which it is conducted away through a pipe 57. The compressor 53 is controlled with the aid of a temperature sensor 58 measuring the water temperature in the vessel so that when the temperature in the vessel drops below a given value the compressor is actuated. The medium passing through the mains 52 is thus densified and its temperature is raised. Subsequently the medium gives off its heat to the liquid in the vessel 39 after which the pressure of this medium is reduced when passing through the choke 54. The medium is subsequently preheated in the heat-exchanger 55 to a temperature at least substantially equal to the temperature of the industrial cooling water, after which it is again supplied to the compressor 53.

The heat supplied in the vessel 39 is used on the one hand for heating the tap water already preheated in the heat-exchanger 45 and through the pipe 50 said water can be conducted to consumers.

The water or another liquid heated in the vessel 39 may be used for further heating air passing through the channel 3, when the closing member 42 is opened and the pump 43 is actuated.

In the heat-exchanger 2 the air passing through the channel 3 can be heated to an extent such that with the aid of the heat supplied via the heat-exchanger 2 the ventilation losses of the space(s) to be heated or the like can be compensated for. In dependence on the temperature of the industrial cooling water a given part of the transmission losses of the space(s) to be heated can be compensated for with the aid of the heat supplied via the heat-exchanger 2. The further heat required for heating can be supplied in the embodiment of the heating system of Fig. 9 with the aid of the heat-exchanger 38. As long as the heat-exchanger 38 need not be switched on, the heat supply is controlled by means of the control-mechanism 35 acting on the position of the valve 34. If the outdoor temperature is so low that the heat-exchanger 38 has to be switched on, the control-mechanism 35 will act upon the closing member 42 and the pump 43 in order to ensure that the heating fluid required for heating will be pumped from the vessel 39 through the heat-exchanger 38.

Although at cooling water temperature exceeding 25 °C it is not necessary to recirculate the air introduced into the space(s) to be heated, whilst, in principle, the drawn-in air via ventilation openings out of the space(s) or the like can be conducted away as stated above, it is possible in the system shown in Fig. 9 to recirculate part of the air through the control-valve 33. This is particularly useful when the temperature of the available industrial cooling water is lower than 25 °C or when for some reason or other no cooling water is available or if it is desired to avoid as much as possible draught phenomena at a standstill of the ventilator or if it is desired to minimize the size of the heat-exchanger 2. The ratio between fresh air and recirculated air can be controlled by means of the valves 32 and 33.

Example II

On the basis of a dwelling of the dimensions mentioned in the foregoing first example of calculations the following calculation can

be made for a system as shown in Fig. 9, the following magnitudes being known or chosen freely:

Desired indoor temperature $T_{bi} = 20\,^{o}C$

Temperature of the available cooling water $T_{ki} = 35\,^{o}C$

Exit temperature of the cooling water when leaving heat-exchanger 3 (Fig. 9) $T_{kuB} = 15\,^{o}C$

Assumed outdoor temperature $T_{o} = -10\,^{o}C$

- Temperature of air leaving the heat-exchanger 2 (see Fig. 9) $T_{lu3} = 30\,^{o}C$

- Temperature of air leaving the heat-exchanger 38 $T_{lu6} = 55\,^{o}C$

- Temperature in vessel 39 $T_{hw} = 55\,^{o}C$

- Temperature condensing medium of the heat pump $T_{hwp} = 60\,^{o}C$

- Temperature tap water after heat-exchanger 45 $T_{t} = 30\,^{o}C$

- Temperature of cold tap water $T_{kw} = 12\,^{o}C$

- Desired temperature tap water $T_{hw} = 55\,^{o}C$

- V = ventilation multiple = number of refreshment of total contents per hour

- Minimum ventilation multiple $0,8$

- Required ventilation multiple $V_{ben}$

- Specific heat air $c_{1} = 1\ kJ/k\,^{o}C$

- Specific heat water $C_{w} = 4.2\ cJ/kg\,^{o}C$

- Specific weight air $\varphi_{1} = 1.3\ kgs/m^{3}$

- Specific weight water $\varphi_{w} = 1000\ kgs/m^{3}$

- Conversion factor $W \rightarrow kcal/h\ 0.86$

- Connection value $A_{T}$ = amount of heat to be supplied to the dwelling or the building to compensate for transmission losses at a temperature of $-10\,^{o}C$

In this example $A_{T} = 5900\ W$

- $A_{3}$ = contribution of heat-exchanger 2 to the connection value $A_{T}$ (W)

- $A_{6}$ = contribution of heat-exchanger 38 to the connection value $A_{T}$ (W)

- $A_{V}$ = ventilation loss = amount of heat to be imparted to the amount of air leaving the dwelling or the building with regard to required refreshment (the ventilation multiple chosen).

- $\alpha_3$ = "overall" heat transfer coefficient in heat-exchanger 2. 36 $W/m^2$ $^{o}C$
- $\alpha_6$ = "overall" heat transfer coefficient in heat-exchanger 38 36 $W/m^2$ $^{o}C$
- $O_{B3}$ = design load of heat exchanger 2
- $O_{B6}$ = design load of heat exchanger 38
- $\Delta T_{ln3}$ = logarithmic temperature difference in heat-exchanger 2 = 12,5 $^{o}C$
- $\Delta T_{ln6}$ = logarithmic temperature difference in heat-exchanger 38 = 12,5 $^{o}C$
- Contribution solar radiation 0 W
- Contribution internal heat sources 0 W
- Amount of tap water                         $M_T$ = 5 kgs/h
- Yield of boiler or geyser                   $\eta_{wv}$ = 50% (0,5)
- Yield of gas heater                         $\eta_{rv}$ = 100% (1)
- Yield heat pump                             $\eta_w$ = 300% (3)
- $E_3$ = required energy in heat-exchanger 2
- $E_6$ = required energy in heat-exchanger 38
- $E_{wt}$ = required energy for hot tap water

By means of the foregoing data first the contribution of heat-exchanger 2 to the connection value is calculated as a function of the ventilation multiple, then the contribution of heat-exchanger 38 to the connecting value as a function of the ventilation multiple.

I. Contribution of heat-exchanger 2 to the connection value as a function of the ventilation multiple.

For assessing the contribution of heat-exchanger 2 to the connection value it is necessary to start from the amount of ventilation air that can be heated to 30 $^{o}C$ at the most ($T_{lu3}$) and that leaves the dwelling through vent holes in doors and windows for a room temperature of 20 $^{o}C$ ($T_{bi}$). This amount of air having a temperature difference of 10 $^{o}C$ can impart heat only to the dwelling. The contribution of heat-exchanger 2 to the connection value $A_T$ is then:

$$A_3 = \frac{V \times I \times \rho_l \times c_l \times (T_{lu3} - T_{bi})}{3600} =$$

$$\frac{V \times 310 \times 1,3 \times 1 \times 10^3 \times (30 - 20)}{3600} = 1125\ V \quad (W)$$

As a matter of course the design load of heat-exchanger 2 has to exceed the above-mentioned 1125 V.

II. Contribution of heat-exchanger 38 to the connection value as a function of the ventilation multiple.

For assessing the contribution of heat-exchanger 38 to the connection value it is necessary to take as a basis the amount of ventilation air that can be heated to the final temperature $T_{1u6}$.

In an indirect arrangement as shown in Fig. 9 $T_{1u6}$ can be chosen to be 50 $^{\circ}$C at the most because $T_{hwp}$ = 60 $^{\circ}$C and $T_{hw}$ = 55 $^{\circ}$C. (In a direct connection of the heat pump or the heat-exchanger 38 $T_{1u6}$ may be chosen to be 55 $^{\circ}$C).

The contribution of heat-exchanger 38 to the connection value $A_T$ is found by:

$$A_6 = \frac{V \times I \times c_\ell \times \rho_\ell \times (T_{1u6} - T_{1u3})}{3600} =$$

$$\frac{V \times 310 \times 1{,}3 \times 1 \times 10^3 \times (50-30)}{3600} = 2250 \text{ V} \qquad (W)$$

III. Total connection value.

The contribution of heat-exchangers 2 and 38 together have to yield the total connection value $A_T$. Thereby the required ventilation multiple can be calculated, to wit:

1125 V + 2250 V = 5900

3375 V = 5900

$$V_{ben} = \frac{5900}{3375} = 1.75$$

In other words:

the required ventilation multiple to compensate for the transmission loss of 5900 W under the given conditions is 1.75.

IV. Proportioning of heat-exchanger 2.

With the aid of the $V_{ben}$ found the design load of heat-exchanger 2 can be calculated.

For heat-exchanger 2 the design load has to exceed the

-22-

contribution to the connection value because the air leaving the dwelling at 20 $^{\circ}$C has to be heated by heat-exchanger 2 from the outdoor temperature.

Therefore, the design load of heat-exchanger 2 has to be calculated with the aid of the required ventilation multiple and the heating of the air from the outdoor temperature up to the temperature at which the air emanates from the ehat-exchanger 2 of Fig.9. This design load can be found by:

$$O_{B3} = \frac{V_{max} \times I \times c_l \times \rho_l \times (T_{1u3} - T_o)}{3600} =$$

$$\frac{1{,}75 \times 310 \times 1{,}3 \times 1 \times 10^3 \times (30-20)}{3600} = \pm 7900 \text{ W.}$$

The required dimensions of heat-exchanger 2 of Fig. 9 can, therefore, be found by:

$$F_{required\ 3} = \frac{O_{B3}}{\alpha_3 \cdot \Delta T_{1n3}} = \frac{7900}{36 \times 12{,}5} = \pm 17.5 \text{ m}^2$$

For this purpose a plate exchanger of 0,40 x 0,40 x 1,40 ms with 32 plates of 100 m x 0,4 m at intervals of 0,012 m can be chosen.

It should be noted that when heat-exchanger 2 should become too large, it has to be investigated whether with the aid of an amount of recirculating air of 20 $^{\circ}$C (through valve 33 in Fig. 2) the size of heat-exchanger 3 can be reduced without adversely affecting the obtainable lower investments in the heat-exchanger 2 by the additional costs of return channels.

IV. Proportioning of heat-exchanger 38.

By means of the $V_{ben}$ found the design load of heat-exchanger 38 can also be calculated. This load amounts to:

$$O_{N6} = \frac{V_{ben} \times I \times c_l \times \rho_l \times (T_{1u6} - T_{1u3}}{3600} =$$

$$= \frac{1{,}75 \times 310 \times 1 \times 10^3 \times 1{,}3 \times (50-30)}{3600} = \pm 3940 \text{ W.}$$

-23-

The required dimensions of heat-exchanger 38 of Fig. 9 then are:

$$F_{\text{required } 6} = \frac{O_{B6}}{\alpha_6 \times \Delta T_{\ln 6}} = \frac{3940}{36 \times 12,5} = \pm 8,75 \text{ m}^2$$

Thereto can be chosen a plate exchanger of 0,40 x 0,40 x 0,70 ms with 32 plates of 0.7 x 0.4 m at intervals of 0,12 m.

V. Calculation of the amount of energy to be supplied to the novel system shown in Fig. 9.

For the heating system 1200 full-load hours are assumed. For the tap water system it is assumed that 120 litres of water a day at 12 $^{O}$C has to be heated to 55 $^{O}$C for 360 days a year.

The energy to be supplied:

for heating:

- in heat-exchanger 2 no additional supply of heat is needed since waste cooling water is used $\quad E3 = 0$

- heat-exchanger 38 requires 3940 W, which is produced by a heat pump which derives the heat from the industrial cooling water with a degree of efficiency of nano $\eta_w$ of 300% $\quad E_6 = \frac{3940}{3} = 1330W,$

Total $\quad = 1330$ W.

For 1200 full-load hours a year the amount of energy to be supplied

$$E_T = \frac{1200 \times 1330}{10^3} \qquad = 1600 \text{ kwh}$$

For hot tap water:

- for 120 litres a day of hot tap water of 55 $^{O}$C the heat pump requires an amount of energy:

$$E_{wt} = \frac{120 \cdot c_w \times (T_{hw} - T_t)}{3600 \times \eta_w} = \pm 1200 \text{ W/day}$$

For 360 days a year the amount of energy to be supplied is

$$\frac{360 \times 1200}{10^3} \qquad = 430 \text{ kwh}$$

In total for heating tap water in one year $\qquad$ 2030 kwh

VI. Required amount of energy to be supplied by prior art system, conditions being otherwise the same.

For heating:

- In traditional systems a ventilation multiple of 1.75 with fully fresh air will never be used, but, for example 0.75 recirculation with 1 V refreshment.

In this case the heat required for ventilation:

$$\frac{V \times I \times \eta_l \times c_l \times (20 - 10)}{3600} =$$

$$\frac{1 \times 310 \times 1,3 \times 1 \times 10^3 \times 30}{3600} = \pm 3375 \text{ W.}$$

For transmission loss 5900 W was assumed.

Total requirement for heating = 9275 W.

By using a high-efficiency boiler ($\eta_{rv}$ = 1) the amount of energy to be supplied is 9275 W.

For 1200 full-load hours a year the amount of required energy is

$$\frac{1200 \times 9275}{10^3} = 11.130 \text{ kwh.}$$

For hot tap water:

- for 120 litres a day of hot tap water of 55° C the boiler or geyser ($\eta_{wv}$ = 50%) requires:

$$E_{wt} = \frac{120 \cdot c_w \cdot (T_{hw} - 12° \text{ C})}{3600 \times \eta_{wv}} = \pm 12.000 \text{ W/day}$$

For 360 days a year the amount of energy to be supplied is

$$\frac{360 \times 1200}{10^3} = 4320 \text{ kwh}$$

In total 15.450 kwh.

VII. Saving of the novel system:

The system embodying the invention shown in Fig. 9 as compared with a high-efficiency boiler for space heating and a gas geyser for hot water supply thus saves:

0101118

-25-

$$\frac{15,450 - 2030}{15,450} \times 100\% = 87\%$$

It will be obvious that tap water can be heated with the aid of the industrial cooling water also independently of the heating system, in which case only the heat pump of the device of Fig. 9 with the parts 44 to 57 in conjunction with the vessel 39 is used.

As a matter of course, variations and/or modifications of the embodiments described and illustrated in the drawings are possible within the spirit and scope of the invention.

For example, in the embodiments of the air heating device of Figs. 1 and/or 5 pipes may be connected above the heat-exchanger 2 with the channel 3 for recirculating air in the manner described with reference to Fig. 9, whereas on the other hand, if desired, the air recirculation connection may be dispensed with in the embodiment of Fig. 9.

Various arithmetic examples of potential uses of the invention will be given, use being made of the concepts partly described above and set out again hereinafter.

- Connection value = A

The connection value (A) of a space to be heated (house, building, greenhouse, store and so on) is the amount of heat expressed in W to be supplied per unit time to said space in order to compensate for the heat losses of the space at an outdoor temperature of $-10^{\circ}$ C so that a desired indoor temperature (usually $20^{\circ}$ C for livings, $15^{\circ}$ C for bedrooms, $24^{\circ}$ C for bathrooms, $22^{\circ}$ C for offices, and so on) can be maintained.

The connection value A, therefore, is the amount required to compensate for the heat losses. These losses may be divided into $A_V$ and $A_T$.

- $A_V$ = ventilation loss. In order to maintain sufficiently clean air in the space the air in said space has to be regularly refreshed. The extent of refreshment is expressed by the term "ventilation multiple" (V) which indicates how many times an hour the total air capacity of the space is refreshed. The heat loss due to this refreshment is indicated by $A_V$.

- $A_T$ transmission loss. The transmission loss is caused by the temperature difference between outdoors and indoors producing a heat flow across walls, roofs, windows and floors. This heat stream may be limited by insulating materials.

- $A_{T1}$ = part of the transmission loss compensated by an air heating system of the type described above (Figs. 1 and 5 and part of Fig. 9). The heat losses can be partly compensated by $A_2$ and $A_i$.

- $A_z$ = solar radiation. The positive contribution of solar radiation to heating a space.

- $A_i$ = internal heat sources. The positive contributions of internal heat sources (persons, lighting, cooking) to heating a space.

- V = ventilation multiple: the number of times an hour of refreshment of the air contents of the spaces by open air is termed the ventilation multiple V.

- $R_v$ = recirculation multiple. The number of times an hour of recirculation of the air contents of the spaces in a heating system is termed recirculation multiple $R_v$.

As a basis is invariably taken an air heating system of the kind described, which is directly connected with industrial cooling water which makes good the ventilation loss ($A_v$) and part of the transmission loss ($A_{T1}$), if necessary in conjunction with a further heating system which has to compensate for the remainder of the transmission loss minus the contributions of solar radiation $A_z$ and internal heat sources $A_i$. If $A_{T1} \geqslant A_z - A_i$, the additional heating system is not needed.

The part of the transmission loss ($A_{T1}$) which the air heating system can compensate is determined by the temperature of the available cooling water and must always be as high as possible. As stated above the air heating system will transfer the heat of the industrial cooling water (for example, by means of a lamellae or plate exchanger) to fresh air drawn in from the outside, as the case may be, replenished by an amount of recirculating air and the system has to raise the temperature of this air to a value such that the desired room temperature can be maintained. The air heating system of Fig. 1, 5 or 9 is controlled by the room-temperature thermostat. If the outdoor temperature drops drastically, the air heating system needs the help of a further heating system.

The further heating system has to be proportioned so that it can compensate for the remaining part of the transmission loss $(A_t - A_{T1})$ minus the contributions of solar radiation $(A_z)$ and internal heat sources $(A_i)$.

For spaces (dwellings, greenhouses, buildings, stores and so on) to be built or to be re-installed, in which it is desired not to use additional supply of energy (gas boiler or the like), the further heating system may be formed by the above-mentioned pipe system arranged on or in floors and/or ceilings and/or walls, which pipe system is directly connected - without the intervention of a temperature raising device - with the industrial cooling water as described above.

For spaces (dwellings, greenhouses, buildings, stores and so on) to be built, for which the installation of a pipe system is considered to be too expensive, there may be chosen a partial direct heating with the aid of the air heating system in conjunction with a second air heater directly after the first air heater for further heating the air by means of an additional amount of energy as is set out with reference to Fig. 9.

In existing spaces (dwellings, greenhouses, buildings, stores and so on), in which the installation of a pipe system may be too expensive, the water heating device may be formed by the existing heating system in order to compensate for the remainder of the transmission loss $(A_T - A_{T1})$ minus the contributions of solar radiation and internal heat sources. This system has to be controlled with respect to the outdoor temperature and switched on only at a given outdoor temperature.

Finally attempts may be made to avoid the use of additional heating means in all spaces apart from the air heating system of Fig. 1 or 5 by taking additional insulation precautions.

When air recirculation is used to raise the contribution of the air heating system to the compensation of the transmission loss $(A_{T1})$, whilst the size of the air heating device should be small, there have to be provided means for return channels or a return flow of the air.

By varying the speed of the blower the ventilation multiple can be varied to influence the contribution to the compensation of the transmission loss ($A_{T1}$), The control of the blower also has its effect on the speed of heating the space. On the other hand the speed of the blower affects the electric current consumption. The air heating system has to operate as much as possible with a minimum ventilation multiple or, as the case may be, a minimum amount of recirculation in order to minimize the electric current consumption of the blower. The latter is important because the air heating system will be operating for a large part of the year, whereas additional heating means will contribute only below a given outdoor temperature.

Finally the overall investments in heating means have to be weighed for each individual case against the investments in insulation precautions of the spaces and the cost of recirculation channels in order to assess the optimum of the overall investments.

In the following arithmetic examples the following data are known or may be freely chosen:

- The space to be heated is a dwelling.

$I$ = dwelling capacity = 310 $ms^3$

$T_{bi}$=desired room temperature = 20$^{\circ}$ C (from 8 to 12 p.m.) = 16$^{\circ}$C
from 0 to 8 a.m.)

$T_{lu3}$ = maximum exit temperature of the air from subsystem B = 30$^{\circ}$ C

$A_V$ = ventilation loss = 3375 W at V = 1
= 6750 W at $V_2$

$A_T$ = transmission loss = 5900 W

$A_z$ = solar radiation = 575 W

$A_i$ = internal heat sources = 625 W

$T_{ki}$ = temperature of available cooling water = 35$^{\circ}$ C

$V$ = ventilation multiple = variable between 0.5 and 4

$R_v$ = recirculation multiple = number of times an hour of recirculation of the full air contents of the space.

$\rho_1$ = specific weight of the air = 1.3 kgs/$m^3$

$c_1$ = specific heat of the air = 1 kJ/kg $^{\circ}$ C

$Gr$ = degree hours for $T_{bi}$ = 20/16 $^{\circ}$ C Gr = 74.500 hours

For T = 4.5$^{\circ}$ C Gr = 10.000 hours

For T = 0.5$^{\circ}$ C Gr = 3000 hours

$O_B$ = design load of subsystem B in W

$O_A$ = design load of subsystem A in W

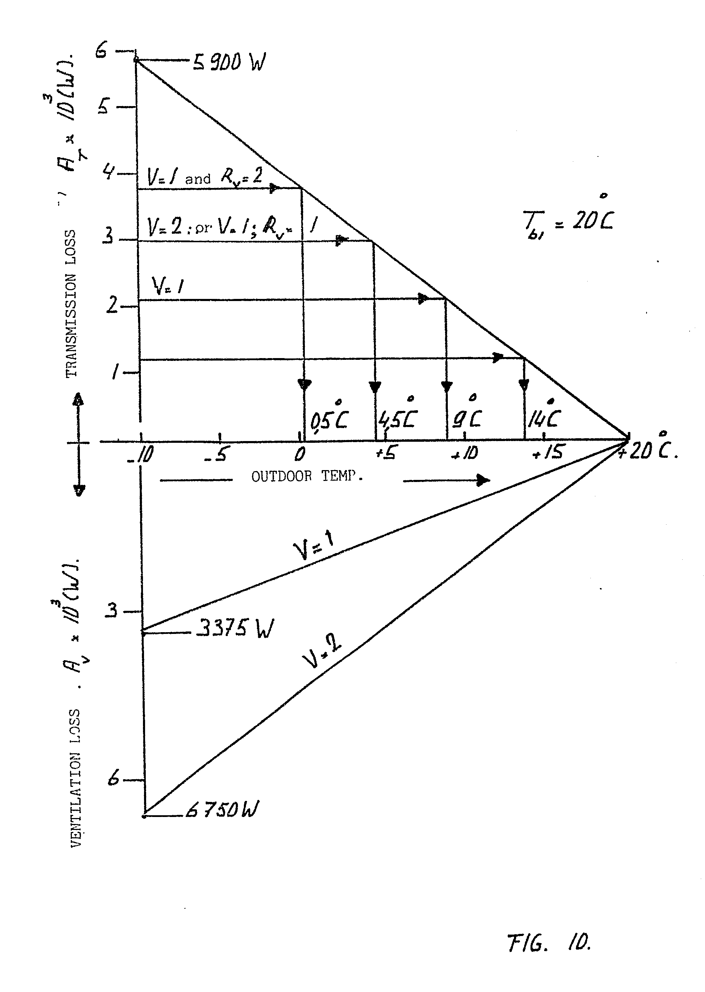

With the aid of these data Fig. 10 is composed, in which above the x-axis the variation of $A_T$ (transmission loss) and below the x-axis $A_v$ - (ventilation loss) are plotted in relation to the outdoor temperature plotted on the x-axis for a desired room temperature of 20$^{\circ}$ C. In the graph the results of solar radiation ($A_z$) and internal heat sources ($A_i$) with respect to the transmission loss have been taken into account. The graph may be used to determine the outdoor temperature at which an air heating system of Fig. 1 or 5 has to be assisted by a further heating system.

Example III

The space concerned (in this case a house) is being built or re-installed and it is desired to extract all heat required for the rooms from the industrial cooling water without using a temperature raising device.

The proceeding is then as follows: Choose the air heating device, for example, according to the method of Fig. 1, directly connected with the industrial cooling water, which device will in any case compensate for the ventilation loss ($A_v$).

At a ventilation multiple of V = 2 the ventilation loss is:

$$A_v = \frac{V \times 1 \times \rho_\ell \times c_\ell \times (T_{bi} - -10)}{3600}$$

$$= \frac{2 \times 310 \times 1,3 \times 1 \times 10^3 \times (20 + 10)}{3600} = \pm 6750 \text{ W.}$$

With regard to the available temperature of the industrial cooling water ($T_{ki}$ = 35$^{\circ}$ C) a maximum air exit temperature ($T_{1u3}$) of the air heating device of 30$^{\circ}$ C will be attainable. Then with the chosen ventilation vultiple of V = 2 the air heating device can contribute to the compensation of the transmission loss at the most by:

$$A_{T1} = \frac{V \times I \times \rho_1 \times c_1 \times (T_{1u3} - T_{bi})}{3600}$$

$$= \frac{2 \times 310 \times 1,3 \times 1 \times 10^3 \times (30-20)}{3600} = \pm 1800 \text{ W}$$

Together with the solar radiation $A_z$ of 575 W and the contribution of internal heat sources $A_i$ of 625 W this means that the air heating device can keep pace with the transmission loss up to $1800 + 575 + 625 = 3000$ W. From the graph of Fig. 10 it can be found that the associated outdoor temperature is $4.5\,^{\circ}$ C. Only below an outdoor temperature of $4.5^{\circ}$ C the air heating system has to be helped to compensate for the remaining part of the transmission loss (the ventilation loss can be compensated by the air heating device at any temperature). Said help has to be given by a further heating device, which is also directly connected with the industrial cooling water. Since this water has a temperature of not more than $T_{ki} = 35^{\circ}$ C it is only possible to choose for this further heating device a system of very large surface, that is to say, a pipe system, the basic diagram of which is shown in Fig. 2. The further heating device has to be proportioned so that it can compensate for the remainder of the transmission loss i.e. $A_T - A_{T1} - A_z - A_i = 5900 - 3000 = 2900$ W.

Since this further water heating device need become operative only at a given outdoor temperature (here $4.5^{\circ}$ C), the water heating device has to be controlled with respect to the outdoor temperature or a derivative thereof in contrast to the air heating device which is controlled by the room thermostat.

According to the graph of Fig. 10 an increase in the ventilation multiple (with respect to $A_{T1}$) of $V = 1$ to $V = 2$ is only necessary at an outdoor temperature of $9^{\circ}$ C.

It will be obvious that, for example, with the aid of a switching programme electric energy for the blower may be saved, but this lies beyond the scope of this example.

When determining the design load of the air heating device it has to be considered that the air heating device has to compensate not only for the transmission loss $A_{T1} = 1800$ W but also for the ventilation loss $A_v = 6750$ W. In the chosen example ($V = 2$) $O_B = 1800$ W $+ 6750$ W $= 8550$ W. In determining the design load of the water heating device the contribution of the air heating device, the solar radiation $A_z$ and the internal heat sources $A_i$ has to be deducted. In the chosen example ($A_z = 575$ W, $A_i = 625$ W)

$O_A = 5900 - 1800 - 575 - 625 = 2900$ W.

The energy saving of this method as compared with the traditional systems (central heating systems) amounts to:

(at V = 1)

$$\frac{A - A_i - A_z}{30} \times Gr. \times 10^{-3} \text{ kwh} = \frac{3375 + 4700}{30} \times 74.500 = 20.000 \text{ kwh}$$

or else as compared with a gas boiler having a degree of efficiency of 85%:2450 ms$^3$ of natural gas/year, it being assumed that the electric energy for the blower is balanced by the pump energy of the central heating system.

Example IV

The space (house) is being built or re-installed and it is desired to extract the entire amount of heat required for the space from the industrial cooling water with the aid of an air heating device.

Then only the air heating device directly connected with the industrial cooling water is installed and controlled by the room thermostat so that the contribution to the compensation of the transmission loss is maximized.

This is possible by causing an amount of air to recirculate (for example, $R_v = 2$) at a low ventilation multiple (for example, V = 1). In this way the dimensions of the air heating device can be limited (lower investment), although then return channels or return stream openings have to be provided (high investment).

At V = 1 and $R_v = 2$ the contribution to the compensation of the transmission loss $A_{T1}$ by the air heating device is:

$$A_{T1} = \frac{(1 + 2) \times 300 \times 1,3 \times 1 \times 10^3 \times 10}{3600} = \pm 2700 \text{ W}$$

Added to the contributions of solar radiation ($A_z = 575$ W) and of the internal heat sources ($A_i = 625$ W) this means that in total 2700 + 1200 = 3900 W of transmission loss can be compensated. By insulating the house in addition to an extent such that the overall transmission loss $A_T$ of 5900 W is reduced to 3900 W there is no need for a further heating device.

In this case the design load of the air heating device (V = 1, $R_v = 2$) is

$$O_B = 3375 + 2700 = 6075 \text{ W.}$$

Saving of energy then is

$$\frac{6075}{30} \cdot 74.500 = 10^{-3} = 15,100 \text{ kwh.}$$

In this case the ventilator energy will exceed the electric current consumption of a central heating pump of a conventional central heating system (of course, as in the first example, optimalization is possible) Thereto the correction (on a gas basis) is 3100 kwh net saving 12,000 kwh.

With respect to a classical central heating system having a degree of efficiency of 85% this would mean a saving of 1460 ms$^3$ of natural gas a year by applying the invention.

Example V

The space (house) is being built without additional insulation and it is not desired to use a heating system of the floor by a water heating device.

In this case there has to be opted for partial, direct heating by means of the industrial cooling water and an additional of energy to be supplied, though small, has to be accepted to compensate for the failing part.

The basis here is again the required air heating device, which is directly connected with the industrial cooling water and which is controlled in dependence on the indoor temperature, for example, with the aid of a room thermostat for the direct heating with the aid of cooling water.

Also in this case the air heating device has to supply a maximum amount of heat. It being again assumed that $V = 1$ and $R_v = 2$ the air heating device supplies:

$$A_v = 3375 \text{ W.}$$
$$A_{T1} = 2700 \text{ W.}$$
) total 6075 W.

Added to the contributions of the solar radiation $A_z = 575$ W and of the internal heat sources $A_i = 625$ W, this means that a transmission loss not covered by the air heating device is 5900 - 2700 - 575 - 625 = 2000 W.

Consequently this amount of 2000 W has to be supplied by a further heating device.

By choosing thereto an air heater which is arranged directly after the air heating device and which is fed by additional energy (gas, hot water, electricity), an air heating system as shown in Fig. 9 will suffise.

In principle, the control remains the same, though in a first instance the room thermostat controls the air heating device operating on the cooling water, whilst at an outdoor temperature of 0.5 $^\circ$ C (Fig. 10) the supplementary heating device is switched on. At this instant the heating device operating on the cooling water is without control and the control has to be taken over by the supplementary heating device, whilst the heating device operating on the cooling water has to remain in maximum operation.

Extrapolation of the design aids for energy-minded projects, edited by Stuurgroep Energie en Gebouwen, Ministry of Building Constructions and Spacial Arrangements, The Hague, Holland, Nr. 24 gives for a temperature of 0.5$^\circ$ C an amount of degree/hours of about 3000. The required external energy for the additional heating device can then be calculated as follows:

$$\frac{A_T - A_{T1} - A_z - A_i}{30} \cdot 3000 \cdot 10^{-3} =$$

$$= \frac{5900 - 2700 - 575 - 625}{30} \cdot 3000 \cdot 10^{-3} =$$

$$= \frac{2000}{30} \cdot 3000 \cdot 10^{-3} = 200 \text{ kwh.}$$

Saving then amounts to:

| | |
|---|---|
| saving without supply of additional energy (see second arithmetic example) | + 20,000 kwh |
| additional blower energy at $V = 1$ and $R_v$ 3 1 | − 3,100 kwh |
| additional energy for supplementary heating | − 200 kwh |
| Net saving | 16,700 kwh. |

At a degree of efficiency of a conventional central heating system of 85 % this means a saving of 2040 ms$^3$ a year.

Example VI

The space (house) is existing and provided with a conventional central heating system. Also in this case the proceeding starts from the air heating device which is directly connected with the industrial cooling water and which is controlled by means of the room thermostat for direct heating with the aid of cooling water. Also in this case this air heating device has to provide a maximum contribution to the compensation of the transmission losses. Assuming $V = 1$ and $R_v = 2$ the same situation is found as in the third arithmetic example except that now the supplementary heating device is formed by the existing central heating system. As far as control is concerned the air heating device has again to be controlled by the room thermostat, whereas the additional heating device has to be governed by the outdoor temperature, the temperature of the central heating water being set in dependence on the outdoor temperature (so-called temperature-dependent control). The supplementary heating device need only be switched on at an outdoor temperature of $0.5^{\circ}$ C.

The savings in this system are equal to those of Example V i.e. 2040 ms$^3$ a year. However, some investments are required for installing the air heating system in the house. When the air heating device is installed during renovation operations the cost of investment may be low.

Instead of maintaining the existing central heating system, a second air heater may be chosen as an additional heating device which can be fed from the existing central heating boiler. With regard to the potential (lower) water temperature the degree of efficiency will slightly rise and the radiators may be dispensed with. The control then has to be chosen in accordance with the third arithmetic example. The savings remain equal to 2040 ms$^3$ of natural gas a year.

Example VII

The space (house) is existing and provided with an air heating system. Also in this case the air heating device directly connected with the industrial cooling water is used as a basis, the control being performed by the room thermostat for direct heating with the aid of cooling water. The result is an analogous situation as in Example V, except that for the additional heating device the existing air heating system is used. For the same starting points as in Example V ($V = 1$, $R_v = 2$, and control the same) the saving of energy is again 2040 ms$^3$ of natural gas a year.

0101118

CLAIMS

1.      A method of heating buildings, dwellings or similar spaces to be heated by using available cooling water of a temperature of about $40^{\circ}$ C or lower characterized in that the cooling water having a temperature of about $40^{\circ}$ C or lower is supplied to the space(s) to be heated, where by this cooling water air is heated in a heat-exchanger, said air, after having passed through the heat-exchanger, is spread in the space(s) to be heated.

2.      A method as claimed in Claim 1 characterized in that after having passed through the heat-exchanger the air is passed through a further heating device.

3.      A method as claimed in Claim 1 or 2 characterized in that the air is displaced with the aid of a ventilator and the air displaced by the ventilator is passed, in dependence on the desired heating, wholly or partly through the heat-exchanger.

4.      A method as claimed in anyone of the preceding Claims characterized in that the space to be heated is furthermore provided with a water heating device through which is passed the cooling water having a temperature of 40$^{\circ}$ C or lower.

5.          A method as claimed in Claim 4 characterized in that the air heating device is controlled with the aid of a temperature sensor arranged in the space to be heated, whereas the water heating device is controlled with the aid of a temperature sensor measuring the outdoor temperature.

6.          A method as claimed in anyone  of the preceding Claims characterized in that after having passed through the heat-exchanger fed by cooling water the air is brought to a higher temperature with the aid of a further heat source.

7.          A method as claimed in anyone of the preceding Claims characterized in that after having passed through the heat-exchanger fed by cooling water the air is passed through a second heat-exchanger, to which a fluid is fed which is brought to a higher temperature by using a heat pump.

8.          A method as claimed in Claim 7 characterized in that the fluid fed to the compressor of the heat pump is preheated by the cooling water.

9.          A method as claimed in Claim 7 or 8 characterized in that the heat pump is furthermore used to heat tap water.

10.          A method as claimed in Claim 9 characterized in that the tap water is preheated with the aid of the cooling water.

11.          A method as claimed in anyone  of the preceding Claims characterized in that as a water heating device is used a mains of pipes arranged in walls and/or floors of the space to be heated.

12.          A method as claimed in anyone of the preceding Claims characterized in that an existing central heating system is used as a water heating device.

13.          A method as claimed in anyone of the preceding Claims characterized in that at least part of the air used for heating is recirculated.

14.          A method of heating tap water by using available cooling water having a temperature of about 40$^{\circ}$ C or lower characterized in

-3-

that the tap water is preheated in a heat-exchanger by the cooling water and subsequently heated to the desired temperature with the aid of a heat pump, the fluid circulating in the heat pump being preheated with the aid of the cooling water prior to compression.

5.

FIG. 1.

FIG. 2.

FIG. 3.

FIG. 4.

0101118

"5/10"

7

30

5

2

3

10

11

29

12

13

1

6

FIG. 5.

connection value A

TEMP °C

FIG. 6.

FIG. 8.

0101118

FIG. 9.

FIG. 10.